# EUROPEAN PATENT SPECIFICATION

(11) **EP 0 704 170 B1**
(45) Date of publication and mention of the grant of the patent: **16.10.2002**
(21) Application number: 95305588.6
(22) Date of filing: 10.08.1995
(51) Int. Cl.: A23L 1/31, A23P 1/08, A22C 7/00, A23L 1/315

(54) **A method of processing meat**
Verfahren zur Herstellung eines Fleischproduktes
Méthode pour un procédé de viande

(30) Priority: 30.09.1994 GB 9419764
(43) Date of publication of application: 03.04.1996
(73) Proprietor: G.W. Padley Holdings Limited, Sleaford, Lincolnshire NG34 9SL (GB)
(72) Inventor: Kalbassi, Mostafa, Grantham, Lincolnshire NG31 8HZ (GB)
(74) Representative: Powell, Timothy John

(56) References cited:
- EP-A- 0 322 220
- WO-A-89/08983
- WO-A-95/05084
- DE-A- 3 635 572
- US-A- 2 398 636
- US-A- 5 101 716
- FROZEN & CHILLED FOODS, vol. 37, no. 9, 1984 pages 23-46, ANON. 'POULTRY'

## Description

The present invention relates to a method of processing meat. Particularly, but not exclusively, it relates to a method of manufacturing a fixed weight, natural meat parcel with a filling and suitable for coating, flash frying and cooking.

Conventionally, meat dishes known generically as "Kiev" or "Cordon-Bleu" are made by surrounding a filling with meat. These fillings are typically butter, cheese, ham, or any other contrasting food. The meat used is typically chicken breast, but could also be any other type of meat, fish or meat substitute. The meat is normally coated with, for example, flour and water batter or milk, starch, egg etc and breadcrumb and then flash fried and cooked.

Products of this type are currently made in three basic forms as follows:
(a) taking a piece of natural meat, cutting a slot, cavity or pocket with a hand held knife and manually inserting the filling material prior to coating, frying and cooking.
(b) forming a fixed-weight, controlled-shape burger or patty and using the patty as a base onto which a fixed weight portion of filling is placed. A second fixed-weight, controlled-shape burger is then placed over the base and filling and secured to the base around the edges thereof to complete the parcel prior to coating, frying and cooking.
(c) forcing minced or chopped meat through the outer body of a co-extrusion nozzle, the filling material passing through the centre. The resultant filled tube is chopped to the required length or weight and then pressed or rolled to the finished shape. The parcel is then coated, fried and cooked in the same manner as the other two processes previously described.

Processes (b) and (c) have the advantage of producing a product with consistent weight and shape. However, the texture and eating qualities of the meat portions are inferior compared to natural meat as used in process (a). The natural meat product is unsuitable for manufacture by automated processes which are desirable for mass production because of the likely variation in weight and shape of the meat portion which results in an inconsistent final product. WO-A- 89 08983 discloses a process of cutting completely through a food product, DE-C-36 35572 discloses a rotating cutter. Therefore to fully automate the production of a natural meat product, it is desirable to create a natural piece of meat having a fixed weight and, desirably, a fixed shape.

An object of the present invention is to provide a natural meat product suitable for mass production.

A further object is to provide an automatic process for producing a filled piece of natural meat having a fixed weight and shape.

The present invention provides a method of processing meat comprising steps of:
trimming a piece of meat to a predetermined weight by utilising automatic meat trimming apparatus;
cutting the piece of meat to form a cavity, slot or pocket having a predetermined depth without cutting right through the piece of meat by utilising moveable automatic meat cutting apparatus selected from the group consisting of a rotating disc knife; a vibrating or oscillating blade; a sharp blade that swings in an arcuate movement through the piece of meat; or a water jet cutting apparatus; the automatic meat cutting apparatus being adjustable towards and away from a said piece of meat to determine the depth and length to which the meat cutting apparatus incises the piece of meat;
placing a predetermined amount of filling material in the cavity, slot or pocket; and
sealing the cavity, slot or pocket.

The automatic meat trimming apparatus preferably also trims the piece of meat to a predetermined shape.

Preferably, the automatic meat trimming apparatus comprises, a high-pressure water-jet cutter and, more preferably, the apparatus is computer-controlled. Preferably, the filling operation is automated.

The cutting operation is preferably such that it brings the natural protein of the meat to the surface. The natural protein may then act as an adhesive in sealing the cavity.

The method according to the invention may also include coating and superficial cooking operations. The cooking operation preferably involves flash frying.

In an advantageous embodiment of the invention, the piece of meat may be held between a pair of moving conveyor belts during the steps of cutting and filling the piece of meat. Movement of the conveyor belts may be continuous although an indexed movement is also possible. Prior to cutting the piece of meat, the pair of conveyor belts may be tilted from a horizontal position through 90°, whilst maintaining a constant gap between the conveyor belts, so that the conveyor belts are in a vertical plane. These belts may then diverge, after the cutting step has taken place, thereby opening the cavity, slot or pocket prior to filling the cavity, slot or pocket. The cavity, slot or pocket may be sealed after filling by pressure applied to the piece of meat by bringing the pair of conveyor belts together to their original relative positions.

The method preferably further comprises the step of chilling and packaging the piece of meat.

The filling material may comprise one or more of butter, cheese and ham or other food fillings.

The present invention also provides an arrangement of apparatus for processing meat comprising automatic meat trimming apparatus for trimming a natural piece of meat to a predetermined weight; moveable automatic meat cutting apparatus for cutting the said piece of meat to form a cavity, slot or pocket having a predetermined depth selected from the group consisting of a rotating disc knife, a vibrating or oscillating blade; a sharp blade that swings in an arcuate movement through the piece of meat; or a water jet cutting apparatus; the automatic meat cutting apparatus being adjustable towards and away from a said piece of meat to determine the depth and length to which the meat cutting apparatus incises the piece of meat in a natural piece of meat of predetermined weight without cutting right through the piece of meat; and filling apparatus for placing a portion of filling material in a cavity, slot or pocket in a natural piece of meat of predetermined weight.

The present invention further provides a meat product produced by the method or apparatus described above.

Apparatus according to the invention can be used to provide a filled piece of natural meat of fixed weight which is suitable for mass production.

Further, use of automatic meat trimming apparatus means that natural meat can be used to provide a filled meat product giving an end product having a predetermined weight and improved texture and eating qualities.

The method of the invention can be made fully automatic which produces a consistent end product with a higher throughput than that of conventional manual methods.

In addition, use of automatic meat cutting apparatus provides accurate positioning and sizing of the cavity.

Further, advantageous features of the apparatus of the invention are defined in Claims 19 to 29.

The present invention will now be explained in more detail by way of the following description of a preferred embodiment and with reference to the accompanying drawings in which:
Figure 1a shows a meat product produced by a method according to the present invention;
Figure 1b shows a cross-section on line A-A of the meat product of Figure 1a;
Figure 2 is a flow diagram illustrating a method of processing meat according to the present invention;
Figure 3a shows schematically a side view of part of an arrangement of apparatus for carrying out the process of the present invention; and
Figure 3b shows a plan view of part of the arrangement of apparatus for carrying out the process of the present invention.

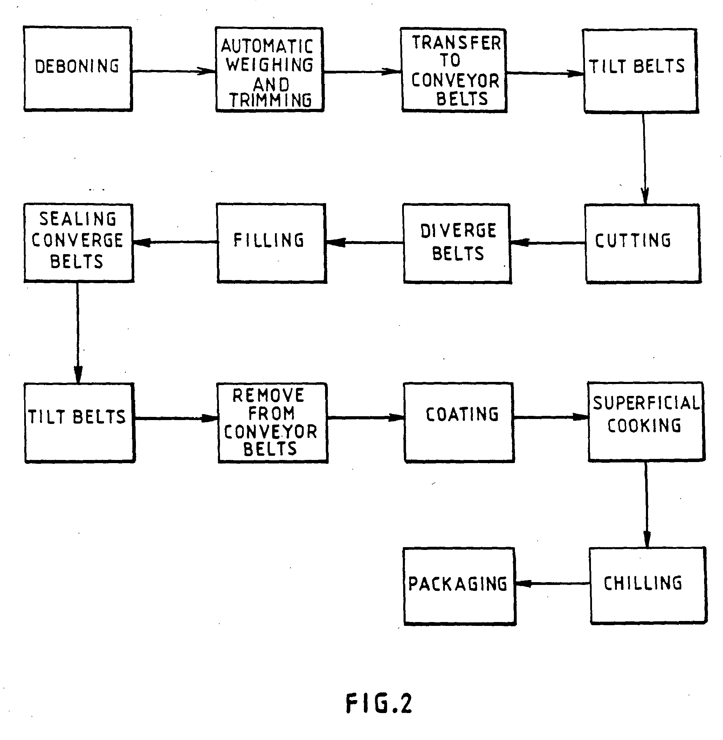

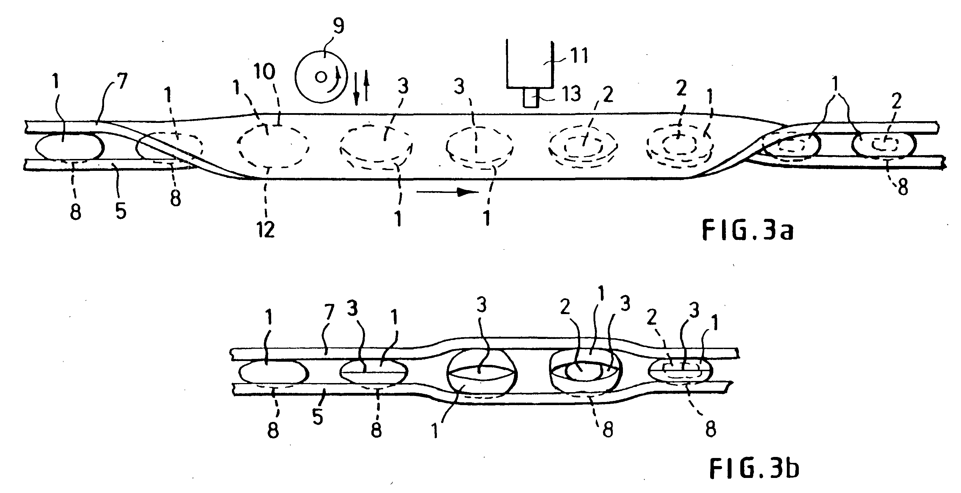

A method according to the invention will now be described with reference to figures 2, 3a and 3b.

A piece of meat is removed from a selected carcase, for example of poultry or other meat, using standard deboning procedures. The piece of meat is automatically trimmed to a predetermined shape and weight by a high-pressure water-jet cutting system. This is controlled by a computer to give a consistent shape and a controlled weight within a tolerance of + 1.5%.

The trimmed piece of meat 1 is then transferred onto a horizontal elongate base conveyor belt 5, shown in Figures 3a and 3b. The conveyor belt 5 comprises a plurality of shallow depressions 8 positioned at intervals along its length. These depressions 8 each conform generally to the shape of the trimmed piece of meat 1 and the piece of meat is placed so that it is located within one of the depressions. The piece of meat 1 is thus retained in a fixed position on the belt 5.

An upper conveyor belt comprising a ribbed belt 7 is arranged to run at the same linear speed and in the same direction as the base conveyor 5. The upper conveyor belt 7 is brought into pressing contact with the trimmed piece of meat 1 located in the depression 8 of the base conveyor belt 5 so as to grip the piece of meat 1 firmly in position.

Belt guidings, not shown in the figures, are used to guide the upper and base conveyor belts 5, 7 along a predetermined path. The belt guidings are arranged to cause rotation of the upper and base belts 5, through 90° whilst retaining the previous relative spacing of the belts 5, 7. The piece of meat 1 is now clamped in a vertical plane as shown in figures 3a and 3b so that one edge of the piece of meat 1 is located uppermost to form an upper edge 10 of the piece of meat 1 and the other is located lowermost to form a lower edge 12 of the piece of meat 1.

A rotating disc knife 9 is positioned above the conveyor belts 5, 7 at a position beyond the belt guidings which cause the rotation of the belts 5, 7 in the direction of travel, as shown in figure 3a. The rotating disc knife 9 is vertically movable by means of a pneumatic cylinder, not shown in the figures. The rotating disc knife 9 is lowered into the narrow gap between the upper and base conveyor belts 5, 7 when the piece of meat 1 is positioned below the rotating disc knife 9 by the movement of the upper and base conveyors 5, 7. The rotating disc knife 9 rotates in a plane parallel to the vertical plane of the upper and base conveyor belts 5, 7 and makes a cut in the upper edge 10 of the piece of meat 1. The depth and length of the cut can be adjusted by adjusting the distance moved by the disc knife 9 and also the duration of the movement of the disc knife 9. This cutting operation forms a cavity 3 as shown in figures 3a and 3b. This cavity 3 extends into the piece of meat 1 from the upper edge 10 towards the lower edge 12 without passing right through the piece of meat 1.

The cutting action of the rotating disc knife 9 causes the natural protein, for example myosin, within the piece of meat 1 to be brought to the surface.

After completion of the cutting operation, the rotating disc knife 9 is raised, again by means of the pneumatic cylinder. As the rotating disc knife 9 is withdrawn, the belt guidings diverge causing divergence of the belts 5, 7. An edible adhesive or emulsion can be applied to the cut surfaces of the piece of meat 1, particularly in the region of the upper edge 10 of the piece of meat 1. As the conveyor belts 5, 7 diverge, the piece of meat 1 parts to open the cavity 3 along the upper edge 10 of the piece of meat 1.

When the cavity 3 has been opened, the piece of meat 1 passes beneath a filling material dispenser 11. The filling material dispenser 11 has an outlet 13 which is lowered by means of a pneumatic cylinder, not shown in the figures, and enters the opening of the cavity 3. Dependent on the characteristics of the filling material 2 (figures 3a and 3b) it is either pumped or rammed through the outlet 13 into the part of the cavity 3 innermost in the piece of meat 1. The outlet 13 is then withdrawn by raising the outlet 13 away from the piece of meat 1 and returning it to its original position..

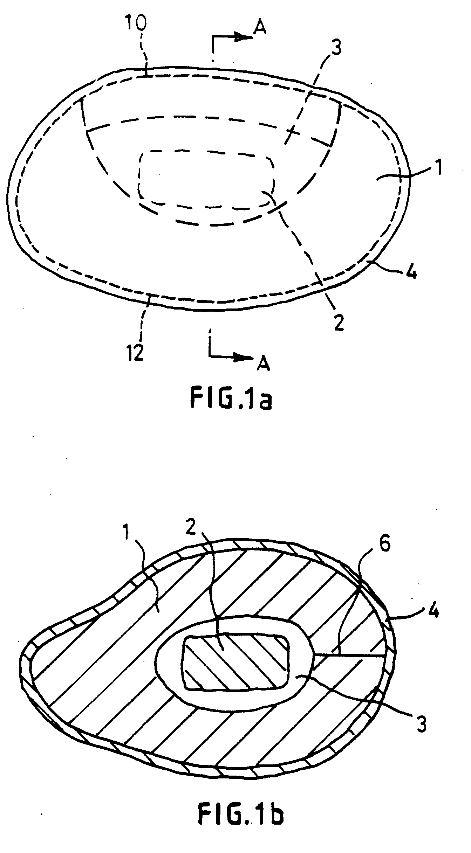

The belt guidings then cause the conveyor belts 5, 7 to converge again to bring the open edges of the cavity 3 together. The natural protein in the piece of meat 1, brought to the surface by the cutting action of the rotating disc knife 9, or the subsequently applied edible adhesive or emulsion, acts as an adhesive to seal the opening of the cavity 3 at the upper edge 10 of the piece of meat 1. This forms a seal 6 along the upper edge 10 shown in figure 1 and figure 3b.

Whilst maintaining a constant gap between the conveyor belts 5, 7 and hence applying pressure to cure the seal 6, the upper and base conveyor belts 5, 7 are rotated through 90° by means of the belt guiding so that the piece of meat 1 reverts to the original horizontal position.

The piece of meat 1 is then released from the conveyor belts 5, 7 by removing the upper belt 7 and is transferred to conventional coating and superficial cooking processes. The end product can be breaded, covered with pastry, topped with garnish, cooked or served in sauce or packaged raw. In figure 2, the piece of meat 1 is subjected to coating, superficial cooking,for example flash frying, chilling and packaging.

The end product produced by the method in accordance with the present invention will now be described.

With reference to Figures 1a and 1b, the end product comprises a single piece of natural meat 1. The piece of meat 1 is generally ellipsoidal in shape and has a predetermined weight.

The piece of meat 1 comprises a cavity which is completely encased by the piece of meat 1. Filling material 2 is contained within the cavity 3. The filling may comprise butter, cheese, ham or any other contrasting food.

The piece of meat 1 is completely encased in a thin coating 4. The coating may be a flour and water batter or milk, starch, egg etc. and breadcrumb. This coating is cooked or set by a flash frying process and subsequently chilled and packaged for sale.

The above described method allows automated mass production of filled pieces of natural meat of fixed weight and the use of natural meat means that the end product has an improved texture and eating quality.

Further, although the above method describes a basic single line process, the warping of the guided belts through 90° allows for adjacent multi-line installations for higher throughput applications.

The conveyor belts need not be tilted into a vertical position as described above. The cutting and filling operations may be performed with the belts in a horizontal position. However, the filling operation at least is preferably carried out with the belts in the vertical position. Also, the conveyors need not necessarily be arranged in a single straight line but may follow angled or arcuate paths. Further, movement of the belts may either be in discrete steps or a continuous motion. The shallow depressions may be absent from the base conveyor which may be flat with the piece of meat placed carefully in position on the belt. Alternatively, the conveyor belts may be provided with short spiked protrusions which will hold the pieces of meat in position. Sensors may be used to indicate the position of the respective piece of meat in order to enable the later processes to be accurately performed.

The rotating disc knife may be replaced by a vibrating or oscillating blade or a shape blade which swings in an arcuate movement through the piece of meat. Water jet cutting apparatus may also be used. In these cicumstances, it is advantageous to move the conveyor belts in discrete steps so that each piece of meat is stationary during the cutting operation.

The dispenser need not be lowered into the cavity but may merely drop the filling from its stationery position into the cavity or alternatively the filling may be inserted into the cavity manually.

Neither the knife nor the dispenser need necessarily be moved by way of a pneumatic cylinder but alternative means such as hydraulic or mechanical means may be used.

The coating of the end product may be formed only on one side of the piece of meat, for example, a layer of pastry or garnish. This would preferably be placed on the piece of meat after it has been flash fried.

The automatic trimming apparatus may easily be adjusted to provide a piece of meat shaped differently from that shown in the figures. Adjustment may be made to produce a more natural-looking meat product.

Furthermore, trimming apparatus within the scope of the appended claims, other than a computer-controlled, high-pressure water-jet cutter may be used.

## Claims

1. A method of processing meat comprising the steps of:
trimming a natural piece of meat to a predetermined weight by utilising automatic meat trimming apparatus;
cutting the said piece of meat to form a cavity, slot or pocket having a predetermined depth without cutting right through the piece of meat by utilising moveable automatic meat cutting apparatus selected from the group consisting of a rotating disc knife; a vibrating or oscillating blade; a sharp blade that swings in an arcuate movement through the piece of meat; or a water jet cutting apparatus; the automatic meat cutting apparatus being adjustable towards and away from a said piece of meat to determine the depth and length to which the meat cutting apparatus incises the piece of meat;
placing a predetermined amount of filling material in the said cavity, slot or pocket; and
sealing the said filled cavity, slot or pocket.

2. A method according to Claim 1, wherein the piece of meat is trimmed to a predetermined shape by utilising the automatic meat trimming apparatus.

3. A method according to any preceding claim, wherein the automatic meat trimming apparatus comprises a high-pressure water-jet cutter.

4. A method according to any preceding claim, wherein the automatic meat trimming apparatus is computer-controlled.

5. A method according to any preceding claim, wherein the cutting of the piece of meat brings natural protein from within the piece of meat to the surface of the piece of meat, the natural protein acting as an adhesive in sealing the cavity, slot or pocket.

6. A method according to any preceding claim, wherein the step of placing the filling in the cavity, slot or pocket utilises automatic filling apparatus.

7. A method according to any preceding claim, wherein the method further comprises the step of:
coating the piece of meat with a layer of coating material.

8. A method according to any preceding claim, wherein the method further comprises the step of:
superficially cooking the piece of meat.

9. A method according to Claim 8, wherein the superficial cooking of the piece of meat involves flash frying.

10. A method according to any preceding claim, wherein;
the piece of meat is held between a pair of moving conveyor belts during the steps of cutting and filling the piece of meat.

11. A method according to Claim 10, wherein the said piece of meat is held in a fixed position relative to the conveyor belts by means of maintaining the conveyor belts at a fixed spacing relative to one another.

12. A method according to Claim 10 or 11 wherein movement of the conveyor belts is continuous.

13. A method according to any of Claims 10 to 12, wherein, prior to cutting the piece of meat, the conveyor belts are tilted from a horizontal position through 90°, whilst maintaining a constant gap between the conveyor belts, so that each conveyor belt lies in a vertical plane.

14. A method according to any of Claims 10 to 13, wherein the conveyor belts diverge to open the cavity, slot or pocket prior to placing the filling in the cavity, slot or pocket.

15. A method according to Claim 14, wherein the cavity, slot or pocket is sealed after filling by pressure applied to the piece of meat by bringing the conveyor belts together.

16. A method according to any preceding claim, wherein the method further comprises the step of:
packaging the piece of meat.

17. A method according to any preceding claim, wherein the filling material comprises one or more of butter, cheese and ham.

18. An arrangement of apparatus for processing meat comprising automatic meat trimming apparatus for trimming a natural piece of meat to a predetermined weight; moveable automatic meat cutting apparatus for cutting the said piece of meat to form a cavity, slot or pocket having a predetermined depth selected from the group consisting of a rotating disc knife, a vibrating or oscillating blade; a sharp blade that swings in an arcuate movement through the piece of meat; or a water jet cutting apparatus; the automatic meat cutting apparatus being adjustable towards and away from a said piece of meat to determine the depth and length to which the meat cutting apparatus incises the piece of meat without cutting right through the piece of meat; and filling apparatus for placing a portion of filling material in a cavity, slot or pocket in the said natural piece of meat of predetermined weight.

19. An arrangement of apparatus according to Claim 18, wherein said automatic meat trimming apparatus comprises a high-pressure water-jet cutter.

20. An arrangement of apparatus according to Claim 18 or 19, wherein said automatic meat trimming apparatus is computer-controlled.

21. An arrangement of apparatus according to any of Claims 18 to 20, wherein said filling apparatus comprises an automatic filling material dispenser.

22. An arrangement of apparatus according to any of Claims 18 to 21, wherein said apparatus further comprises a pair of movable conveyor belts for transferring the piece of meat between the automatic meat cutting apparatus and the filling apparatus.

23. An arrangement of apparatus according to Claim 22, wherein said conveyor belts are movable in a continuous motion.

24. An arrangement of apparatus according to Claim 22 or 23, wherein said apparatus further comprises belt guidings for adjusting a gap between the pair of conveyor belts.

25. An arrangement of apparatus according to any of Claims 22 to 24, wherein said apparatus further comprises belt guidings for tilting the pair of conveyor belts into a vertical position in the vicinity of the filling apparatus.

26. An arrangement of apparatus according to any of Claims 22 to 25 wherein said apparatus further comprises belt guidings that diverge to cause divergence of the conveyor belts.

27. An arrangement of apparatus according to any of Claims 22 to 26 wherein said apparatus further comprises belt guidings that cause convergence of the conveyor belts.

28. An arrangement of apparatus according to any of Claims 22 to 25, wherein a first of said conveyor belts includes at least one depression for receiving and retaining a piece of meat.

29. An arrangement of apparatus according to Claim 28, wherein a second of said conveyor belts comprises ribs arranged substantially opposite a respective depression in the first conveyor belt.

## Patentansprüche

1. Verfahren zum Verarbeiten von Fleisch, das folgende Schritte umfaßt:
Zuschneiden eines natürlichen Fleischstücks auf ein vorbestimmtes Gewicht unter Verwendung einer automatischen Fleisch-Zuschneidevorrichtung,
Einschneiden dieses Fleischstücks zur Bildung eines Hohlraums, Schlitzes oder einer Tasche mit einer vorbestimmten Tiefe, ohne daß völlig durch das Fleischstück hindurch geschnitten wird, unter Verwendung einer beweglichen automatischen Fleischschneidevorrichtung, die aus der Gerätegruppe ausgewählt ist, welche Schneidevorrichtungen mit einer sich drehenden Scheibenklinge, einer vibrierenden oder oszillierenden Klinge, einer scharfen Klinge, die in einer gebogenen Bewegung durch das Fleischstück schwingt, oder einen Wasserstrahl-Schneider umfaßt, wobei die automatische Fleischschneidevorrichtung zu dem Fleischstück hin oder von ihm weg verstellbar ist, um die Tiefe und die Länge festzulegen, bis zu denen die Fleischschneidevorrichtung das Fleischstück einschneidet,
Einbringen einer vorbestimmten Menge von Füllmaterial in besagten Hohlraum, Schlitz oder Tasche, und
Verschließen des gefüllten Hohlraums, Schlitzes oder Tasche.

2. Verfahren nach Anspruch 1, bei dem das Fleischstück unter Verwendung der automatischen Fleisch-Zuschneidevorrichtung auf eine vorbestimmte Form zugeschnitten wird.

3. Verfahren nach einem der vorhergehenden Ansprüche, bei dem die automatische Fleisch-Zuschneidevorrichtung einen Hochdruck-Wasserstrahl-Schneider umfaßt.

4. Verfahren nach einem der vorhergehenden Ansprüche, bei dem die automatische Fleisch-Zuschneidevorrichtung computergesteuert ist.

5. Verfahren nach einem der vorhergehenden Ansprüche, bei dem das Schneiden des Fleischstücks natürliches Protein aus dem Inneren des Fleischstücks an die Oberfläche des Fleischstücks bringt, wobei das natürliche Protein als Kleber beim Verschließen des Hohlraums, des Schlitzes oder der Tasche dient.

6. Verfahren nach einem der vorhergehenden Ansprüche, bei welchem bei dem Schritt des Einbringens der Füllung in den Hohlraum, den Schlitz oder die Tasche eine automatische Füllvorrichtung verwendet wird.

7. Verfahren nach einem der vorhergehenden Ansprüche, bei dem das Verfahren weiterhin den Schritt umfaßt, daß das Fleischstück mit einer Schicht aus einem Überzugsmaterial überzogen wird.

8. Verfahren nach einem der vorhergehenden Ansprüche, bei dem das Verfahren weiterhin den Schritt umfaßt, daß das Fleischstück oberflächlich gekocht wird.

9. Verfahren nach Anspruch 8, bei dem das oberflächliche Kochen des Fleischstücks ein Blitzfrittieren umfaßt.

10. Verfahren nach einem der vorhergehenden Ansprüche, bei dem das Fleischstück während der Schritte des Schneidens und Füllens des Fleischstücks zwischen zwei sich bewegenden Förderbändern gehalten wird.

11. Verfahren nach Anspruch 10, bei dem das Fleischstück relativ zu den Förderbändern dadurch in einer festen Position gehalten wird, daß die Förderbänder zueinander in einem festen Abstand gehalten werden.

12. Verfahren nach Anspruch 10 oder 11, bei dem die Bewegung der Förderbänder kontinuierlich ist.

13. Verfahren nach einem der Ansprüche 10 bis 12, bei dem vor dem Schneiden des Fleischstücks die Förderbänder aus einer horizontalen Position um 90° gekippt werden, wobei ein konstanter Spalt zwischen den Förderbändern aufrechterhalten wird, so daß jedes Förderband in einer senkrechten Ebene liegt.

14. Verfahren nach einem der Ansprüche 10 bis 13, bei dem die Förderbänder divergieren, um den Hohlraum, den Schlitz oder die Tasche zu öffnen, bevor die Füllung in den Hohlraum, den Schlitz oder die Tasche eingebracht wird.

15. Verfahren nach Anspruch 14, bei dem der Hohlraum, der Schlitz oder die Tasche nach dem Füllen durch einen Druck verschlossen wird, der auf das Fleischstück dadurch ausgeübt wird, daß die Förderbänder zusammengeführt werden.

16. Verfahren nach einem der vorhergehenden Ansprüche, bei dem das Verfahren weiterhin den Schritt umfaßt, daß das Fleischstück verpackt wird.

17. Verfahren nach einem der vorhergehenden Ansprüche, bei dem das Füllmaterial Butter und/oder Käse und/oder Schinken umfaßt.

18. Geräteanordnung zum Verarbeiten von Fleisch, die eine automatische Fleisch-Zuschneidevorrichtung zum Zuschneiden eines natürlichen Fleischstücks auf ein vorbestimmtes Gewicht und eine bewegliche automatische Fleischschneidevorrichtung zum Schneiden dieses Fleischstücks zur Ausbildung eines Hohlraums, eines Schlitzes oder einer Tasche mit vorbestimmter Tiefe umfaßt, die aus der Gruppe von Schneidevorrichtungen ausgewählt ist, die eine sich drehende Scheibenklinge, eine vibrierende oder oszillierende Klinge, eine scharfe Klinge, die in einer gebogenen Bewegung durch das Fleischstück schwingt, oder einen Wasserstrahl-Schneider umfaßt, wobei die automatische Fleischschneidevorrichtung zu dem Fleischstück hin oder von ihm weg einstellbar ist, um die Tiefe und Länge festzulegen, mit denen die Fleischschneidevorrichtung das Fleischstück einschneidet ohne durch das Fleischstück völlig hindurch zu schneiden, und eine Füllvorrichtung zum Einbringen einer Portion eines Füllmaterials mit vorbestimmtem Gewicht in einen Hohlraum, Schlitz oder eine Tasche in dem besagten natürlichen Fleischstück.

19. Geräteanordnung nach Anspruch 18, bei der die automatische Fleisch-Zuschneidevorrichtung einen Hochdruck-Wasserstrahl-Schneider umfaßt.

20. Geräteanordnung nach Anspruch 18 oder 19, bei der die automatische Fleischschneidevorrichtung computergesteuert ist.

21. Geräteanordnung nach einem der Ansprüche 18 bis 20, bei der die Füllvorrichtung eine automatische Füllmaterial-Abgabevorrichtung umfaßt.

22. Geräteanordnung nach einem der Ansprüche 18 bis 21, bei der die Anordnung weiterhin zwei bewegliche Förderbänder zum Überführen des Fleischstücks zwischen der automatischen Fleischschneidevorrichtung und der Füllvorrichtung umfaßt.

23. Geräteanordnung nach Anspruch 22, bei der die Förderbänder in einer kontinuierlichen Bewegung bewegbar sind.

24. Geräteanordnung nach Anspruch 22 oder 23, bei der die Anordnung weiterhin Bandführungen zum Einstellen eines Spalts zwischen den beiden Förderbändern umfaßt.

25. Geräteanordnung nach einem der Ansprüche 22 bis 24, bei der die Anordnung weiterhin Bandführungen zum Kippen der beiden Förderbänder in eine vertikale Position in der Nähe der Füllvorrichtung umfaßt.

26. Geräteanordnung nach einem der Ansprüche 22 bis 25, bei der die Anordnung weiterhin Bandführungen umfaßt, die auseinanderlaufen, um ein Auseinanderlaufen der Förderbänder zu bewirken.

27. Geräteanordnung nach einem der Ansprüche 22 bis 26, bei der die Anordnung weiterhin Bandführungen umfaßt, die ein Konvergieren der Förderbänder bewirken.

28. Geräteanordnung nach einem der Ansprüche 22 bis 25, bei der ein erstes der beiden Förderbänder wenigstens eine Vertiefung zur Aufname und zum Festhalten eines Fleischstücks umfaßt.

29. Geräteanordnung nach Anspruch 28, bei der ein zweites Förderband Rippen umfaßt, die im wesentlichen einer entsprechenden Vertiefung im ersten Förderband gegenüberliegend angeordnet sind.

## Revendications

1. Procédé de traitement de viande, comprenant les étapes consistant à :
découper une pièce naturelle de viande à un poids prédéterminé en utilisant un appareil de découpage de viande automatique.
découper ladite pièce de viande pour former une cavité, un fente ou une poche ayant une profondeur prédéterminée sans découper juste à travers la pièce de viande par utilisation d'un dispositif de découpage automatique de viande mobile sélectionné parmi le groupe composé d'un couteau à disque rotatif ; d'une lame vibrante oscillante ; d'une lame affûtée qui oscille en vibrant selon un mouvement arqué à travers la pièce de viande ; ou un dispositif de découpage à jet d'eau ; le dispositif de découpage de viande automatique étant ajustable en rapprochement et en écartement de ladite pièce de viande, afin de déterminer la profondeur et la longueur à laquelle l'appareil de découpage de viande incise la pièce de viande ;
placer une quantité prédéterminée de matériau de remplissage dans ladite cavité, fente ou poche ; et
fermer de façon étanche ladite cavité, fente ou poche ayant été remplie.

2. Procédé selon la revendication 1, dans lequel la pièce de viande est découpée à une forme prédéterminée en utilisant le dispositif de découpage automatique de viande.

3. Procédé selon l'une quelconque des revendications précédentes, dans lequel le dispositif de découpage automatique de viande comprend un découpeur à jet d'eau sous haute pression.

4. Procédé selon l'une quelconque des revendications précédentes, dans lequel le dispositif de découpage automatique de viande est commandé par ordinateur.

5. Procédé selon l'une quelconque des revendications précédentes, dans lequel le découpage de la pièce de viande place une protéine naturelle depuis la surface de la pièce de viande à la surface de la pièce de viande, la protéine naturelle agissant comme adhésif pour sceller hermétiquement la cavité, la fente ou la poche.

6. Procédé selon l'une quelconque des revendications précédentes, dans lequel l'étape de placement du remplissage ou farce dans la cavité, fente ou poche fait étape de placement du remplissage ou farce dans la cavité, fente ou poche utilise un appareil de remplissage automatique.

7. Procédé selon l'une quelconque des revendications précédentes, dans lequel le procédé comprend en outre l'étape consistant à :
revêtir la pièce de viande d'une couche de matériau de revêtement

8. Procédé selon l'une quelconque des revendications précédentes, dans lequel le procédé comprend en outre l'étape consistant à :
cuire superficiellement la pièce de viande.

9. Procédé selon la revendication 8, dans lequel la cuisson superficielle de la pièce de viande implique une réfrigération flash.

10. Procédé selon l'une quelconque des revendications précédentes, dans lequel :
la pièce de viande est maintenue entre une paire de bandes transporteuses en déplacement durant les étapes de découpage et de remplissage de la pièce de viande.

11. Procédé selon la revendication 10, dans lequel ladite pièce de viande est maintenue en une position fixée par rapport aux bandes transporteuses, au moyen du maintien des bandes transporteuses à un espacement fixé l'une par rapport à l'autre.

12. Procédé selon la revendication 10 ou 11, dans lequel le déplacement des bandes transporteuses est continu.

13. Procédé selon l'une quelconque des revendications 10 à 12, dans lequel, avant de découper une pièce de viande, les bandes transporteuses sont basculées depuis une position horizontale, d'un angle de 90°, tout en maintenant un intervalle constant entre les bandes transporteuses, de manière que chaque bandes transporteuses soit située dans un plan vertical.

14. Procédé selon l'une quelconque des revendication 10 à 13, dans lequel les bandes transporteuses évoluent en divergeant pour ouvrir la cavité la fente ou la poche avant de placer le remplissage dans la cavité, la fente ou la poche.

15. Procédé selon la revendication 14, dans lequel la cavité, la fente ou la poche est fermée de façon hermétique après remplissage, par application d'une pression sur la pièce de viande, en réunissant ensemble les bandes transporteuses.

16. Procédé selon l'une quelconque des revendications précédentes, dans lequel le procédé comprend en outre l'étape :
d'emballage de la pièce de viande.

17. Procédé selon l'une quelconque des revendications précédentes, dans lequel le matériau de remplissage comprend un ou plusieurs produits parmi le beurre le fromage et le jambon.

18. Agencement d'appareil pour traiter de la viande comprenant un dispositif de découpage automatique de la viande pour découper une pièce naturelle de viande à un poids prédéterminé, un appareil mobile à couper automatiquement la viande pour couper ladite pièce de viande et pour former une cavité une fente ou une poche, ayant une profondeur prédéterminée, sélectionnée parmi le groupe composé d'un couteau à disque rotatif, une lame vibrante ou oscillante ; une lame affûtée qui vibre en un déplacement arqué dans la pièce de viande ; ou un dispositif de découpage à jet d'eau ; le dispositif de découpage automatique de viande étant ajustable en rapprochement ou en écartement de ladite pièce de viande, afin de déterminer la profondeur et la longueur à laquelle le dispositif de découpage de viande incise la pièce de viande, sans découper juste à travers la pièce de viande ; et un appareil de remplissage, pour placer une partie de matériau de remplissage dans une cavité, une fente ou une poche, dans ladite pièce naturelle de viande de poids prédéterminé.

19. Agencement d'appareil selon la revendication 18, dans lequel ledit dispositif de découpage automatique de viande comprend un découpeur à jet d'eau à haute pression.

20. Agencement d'appareil selon la revendication 18 ou 19, dans lequel ledit dispositif de découpage automatique de viande est commandé par ordinateur.

21. Agencement d'appareil dans lequel ledit dispositif de remplissage comprend un distributeur automatique de matériau de remplissage.

22. Agencement selon l'une des revendications 18 à 21, dans lequel ledit appareil comprend en outre une paire de courroies transporteuses mobiles, pour transférer la pièce de viande entre le dispositif de découpage automatique de viande et le dispositif de remplissage.

23. Agencement d'appareil selon la revendication 22, dans lequel lesdites bandes transporteuses sont mobiles en un mouvement continu.

24. Agencement d'appareil selon la revendication 22 ou 23, dans lequel ledit dispositif comprend en outre des guidages de bandes, afin d'ajuster l'intervalle entre la paire des bandes transporteuses.

25. Agencement d'appareil selon l'une quelconque des revendications 22 à 24, dans lequel ledit dispositif comprend en outre des guidages de bandes pour basculer la paire de bandes transporteuses en position verticale, à proximité du dispositif de remplissage.

26. Agencement d'appareil selon les revendications 22 à 25, dans lequel ledit dispositif comprend en outre des guidages de bandes qui divergent pour provoquer la divergence des bandes transporteuses.

27. Agencement d'appareil selon l'une quelconque des revendications 22 à 26, dans lequel ledit dispositif comprend en outre des guidages de courroies qui provoquent une convergence pour provoquer un déplacement convergent des bandes transporteuses.

28. Agencement d'appareil selon l'une quelconque des revendications 22 à 25, dans lequel une première desdites bandes transporteuses comprend au moins une cavité pour recevoir et retenir une pièce de viande.

29. Agencement d'appareil selon la revendication 28, dans lequel une deuxième desdites bandes transporteuses comprend des nervures, agencées sensiblement de façon opposée à une cavité respective, ménagée dans la première bande transporteuse.
